(19)

Europäisches Patentamt

European Patent Office

Office européen des brevets

(11) **EP 2 861 533 B1**

(12) **EUROPEAN PATENT SPECIFICATION**

(45) Date of publication and mention
of the grant of the patent:
**12.02.2020 Bulletin 2020/07**

(21) Application number: **13805062.0**

(22) Date of filing: **13.06.2013**

(51) Int Cl.:
***C01F 17/00*** (2020.01)          ***C01F 7/02*** (2006.01)
***B01J 23/44*** (2006.01)

(86) International application number:
**PCT/US2013/045651**

(87) International publication number:
**WO 2013/188664 (19.12.2013 Gazette 2013/51)**

(54) **COMPOSITES OF MIXED METAL OXIDES FOR OXYGEN STORAGE**

VERBUNDSTOFFE AUS GEMISCHTEN METALLOXIDEN ZUR SAUERSTOFFLAGERUNG

COMPOSITES D'OXYDES MÉTALLIQUES MIXTES POUR LE STOCKAGE D'OXYGÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.06.2012 US 201261660315 P**

(43) Date of publication of application:
**22.04.2015 Bulletin 2015/17**

(73) Proprietor: **BASF Corporation
Florham Park, NJ 07932 (US)**

(72) Inventors:
• **WANG, Xiaoming
  Basking Ridge, NJ 07920 (US)**
• **WASSERMANN, Knut
  Princeton, NJ 08540 (US)**
• **ZHENG, Xiaolai
  Princeton Junction, NJ 08550 (US)**

(74) Representative: **BASF IP Association
BASF SE
G-FLP-C006
67056 Ludwigshafen (DE)**

(56) References cited:
**EP-A1- 2 545 990          WO-A1-2013/062842
CN-A- 101 954 277          JP-A- 2001 106 527
JP-A- 2011 224 428          US-A- 5 883 037
US-A1- 2006 052 243          US-B1- 6 831 036**

• **ZHANG, XIAOYU ET AL.: 'Ce02-Zr02-La203-Al203
composite oxide and its supported palladium
catalyst for the treatment of exhaust of natural
gas engined vehicles' JOURNAL OF NATURAL
GAS CHEMISTRY vol. 18, no. 2, 2009, pages 139
- 144, XP026283147**
• **DI MONTE, ROBERTA ET AL.:
'Pd/Ce0.6Zr0.402/A1203 as advanced materials
for three-way catalysts: Part 1. Catalyst
characterisation, thermal stability and catalytic
activity in the reduction of NO by CO' APPLIED
CATALYSIS B: ENVIRMNMENTAL vol. 24, 2000,
pages 157 - 167, XP055182523**

EP 2 861 533 B1

## Description

TECHNICAL FIELD

The present invention relates to materials used to prepare catalytic washcoats coated on substrates for emissions treatment systems and methods of making these materials. Also provided are methods for reducing contaminants in exhaust gas streams. Embodiments are directed to ceria-zirconia-alumina-based composite materials, optionally, promoted with rare earth metal oxides, that provide high surface area at low alumina content. Specifically, the mixed metal oxide materials of ceria-zirconia-alumina can be formed by using a soluble cerium salt, a soluble zirconium salt, a colloidal alumina suspension, and optionally at least one salt of rare earth metals other than cerium as precursors.

BACKGROUND

Three-way conversion (TWC) catalysts are used in engine exhaust streams to catalyze the oxidation of the unburned hydrocarbons (HCs) and carbon monoxide (CO) and the reduction of nitrogen oxides ($NO_x$) to nitrogen. The presence of an oxygen storage component (OSC) in a TWC catalyst allows oxygen to be stored during (fuel) lean conditions to promote reduction of $NO_x$ adsorbed on the catalyst, and to be released during (fuel) rich conditions to promote oxidation of HCs and CO adsorbed on the catalyst. TWC catalysts typically comprise one or more platinum group metals (e.g., platinum, palladium, rhodium, and/or iridium) located upon a support such as a high surface area, refractory oxide support, e.g., a high surface area alumina or a composite support such as a ceria-zirconia composite. The ceria-zirconia composite can also provide oxygen storage capacity. The support is carried on a suitable carrier or substrate such as a monolithic carrier comprising a refractory ceramic or metal honeycomb structure, or refractory particles such as spheres or short, extruded segments of a suitable refractory material.

The integration of alumina as a diffusion barrier to OSC materials for improved thermostability has been practiced (e.g., Sugiura et al., Bull. Chem. Soc. Jpn., 2005, 78, 752; Wang et al., J. Phys. Chem. C, 2008, 112, 5113). In conventional synthetic approaches to such alumina-ceria-zirconia composites, a soluble aluminum salt, for instance, aluminum nitrate nonahydrate, is typically employed as the alumina precursor. The major contribution to the surface area of such materials is from the alumina component. Increased amounts of alumina in contact with the ceria-zirconia composite, however, can lead to interactions that inhibit efficiency of the oxygen storage function.

CN 101954277 A discloses a preparation process of a coating layer for vehicle three-way catalyst, comprising processes of dispersing alumina, feeding co-sediment material, depositing, aging, sintering and crushing wherein the process of dispersing alumina comprises uniformly stirring and dispersing alumina powder in deionised water through a dispersing agent, the process of feeding co-sediment material comprises adding cerous nitrate and zirconium nitrate into the sizing agent, the process of depositing comprises pouring a depositing agent into the sizing agent and generating Ce(OH)4 and Zr (OH)4 on the surface of alumina until the pH value reaches to be between 8.0 and 10.0, the process of aging comprises stirring and aging for a certain period of time when the pH value reaches to a target value, and the process of sintering and crushing comprises drying, sintering and crushing the aged sizing agent at a certain temperature so as to obtain rare earth coating material for vehicle three-way catalyst.

JP 2001106527 A discloses cerium/aluminum oxide, which does not lower an oxygen storage function even when exposed in a high temperature atmosphere for a long time and a catalyst for purifying exhaust gas using the cerium/aluminum oxide.

US 6,831,036 B1 discloses a co-catalyst for purifying an exhaust gas including a composite oxide including (a) cerium, and (b) at least one element selected from the group consisting of zirconium, yttrium, strontium, barium and a rare-earth element supported on a particulate aluminum oxide support, whereas a specific surface area of the co-catalyst after sintering is not less than 40 m2/g and the oxygen storage capacity at 400° C is not less than 10 mumols/g and the oxygen storage capacity at 700° C is not less than 100 mumols/g.

WO 2013/062842 A1 discloses a process for producing a ceria-zirconia-alumina composite oxide, wherein the process comprises combining a cerium (IV) compound and a zirconium (IV) compound with a slurry of aluminum oxide at a temperature greater than 40°C to produce a reaction slurry, then contacting the reaction slurry with a precipitating agent to precipitate insoluble cerium and zirconium compounds onto the aluminum oxide and form cerium-zirconium-aluminum oxide particles, and calcining the cerium-zirconium-aluminum oxide particles to produce a ceria-zirconia-alumina composite oxide.

US 2006/052243 A1 discloses an oxygen storage material comprising cerium oxide and at least one second oxide of a metal $M^1$ is as well as a process for manufacturing the material and the use of this material in an exhaust gas cleaning catalyst.

Zhang et al, Journal of Natural Chemistry, vol. 18, issue 2, June 2009, pages 139 to 144, disclose the preparation of composite oxides $CeO_2$-$ZrO_2$-$Al_2O_3$ and $CeO_2$-$ZrO_2$-$Al_2O_3$-$La_2O_3$ composite oxides.

US 5,883,037 A discloses thermally stable and highly reducible catalyst compositions, suited for the catalytic conversion of exhaust gases emanating from internal combustion engines notably vehicular exhaust gases, the compositions comprising alumina, the oxides of cerium praseodymium and zirconium, and, optionally, at least one other oxide of bismuth, of a rare earth, or of an element of group VIII of the Periodic Table, and exhibiting a stabilized hydrogen-absorption capacity up to a temperature of at least 1000 °C.

Di Monte et al, Applied Catalysis B: Environmental, vol. 24, issues 3-4, 7 February 2000, pages 157 to 167, disclose Pd-loaded $Ce_{0.6}Zr_{0.4}O2$ solid solutions supported on $Al_2O_3$ as catalysts for the reduction of NO by CO.

EP 2 545 990 A1 discloses the preparation of composites comprising aluminum oxide and cerium or zirconium mixed oxides, comprises (a) providing a suspension comprising boehmite as aluminum oxide precursor and adjusting the pH to 6-11.5, (b) preparing an aqueous metal salt solution comprising cerium and zirconium metal salts, (c) contacting the suspension of (a) with the metal salt solution of (b) at 5-95°C, or exposing the obtained slurry to this temperature, (d) separating the aqueous solution and washing the solid obtained in step (c) with water, (e) drying the obtained solid, and (f) calcining the obtained solid.

JP 2011 224428 A discloses a process for preparing a porous catalyst exhibiting a high capacity of storing/releasing oxygen by virtue of cerium oxide present therein subsequent to exposure to a high temperature condition and excellent catalytic activity at a low temperature by virtue of platinum present therein.

There is a continuing need in the art for catalytic materials that are thermally stable and whose ingredients are used efficiently.

SUMMARY

The present invention is directed to a composite of mixed metal oxides comprising: a ceria-zirconia solid solution that optionally further comprises at least one rare earth oxide other than ceria, being a mixture of ceria, zirconia und optionally one or more rare earth metal oxides other than ceria whereas the mixture exists in a homogeneous phase; and alumina in an amount in the range of 5 to less than 20% by weight of the composite; the composite of mixed metal oxides comprising by weight of the composite: alumina in the range of 5% to less than 20%; ceria in the range of 1% to 50%; zirconia in the range of 10% to 70% by weight; rare earth oxides other than ceria in the range of 0% to 20, wherein the mixed metal oxide composite, after 12 hours of hydrothermal aging at 1050°C, has a reducibility of ceria of at least 50% in $H_2$-TPR at a temperature up to 900°C, wherein the composite of mixed metal oxides is a random mixture of the ceria-zirconia solution and the alumina, and the composite of mixed metal oxides is obtained by the process according to claims 4 or 5. In another aspect, the invention is directed to a method of making a composite of mixed metal oxides comprising ceria, zirconia, and alumina, the method comprising: forming an aqueous solution comprising a cerium salt, a zirconium salt, and optionally at least one rare earth metal salt other than cerium compound; providing a suspension of colloidal alumina in an amount that results in an alumina content in the range of 5 to less than 20% by weight in the composite; mixing the aqueous solution and the suspension of colloidal alumina to form a mixture; adjusting the pH of the mixture with a basic agent to form a raw precipitate; isolating the raw precipitate to obtain an isolated precipitate; hydrothermally treating the raw precipitate at a temperature of at least 80°C; and calcining the isolated precipitate at a temperature of at least 600°C to form the composite of mixed metal oxides. The alumina is formed by using a colloidal alumina precursor. Moreover, the surface areas of these composites are greater than 24 $m^2$/g after 12 hours of hydrothermal aging at 1050°C.

Mixed metal oxides are described where a ceria-zirconia solid solution is used that can optionally further comprise at least one rare earth oxide other than ceria, and the alumina formed by using a colloidal alumina precursor. The mixed metal oxide composite may be a random mixture of the ceria-zirconia solid solution and the alumina.

The source of alumina is a suspension of colloidal alumina.

Also described are catalysts for treating engine exhaust comprising a catalytic material coated on a substrate, the catalytic material comprising: a mixed metal oxide as disclosed herein which is used as oxygen storage component or as a precious metal support, and a precious metal component selected from the group consisting of palladium, rhodium, platinum, and combinations thereof. Catalysts formed herein can be suitable for three-way conversions and/or diesel oxidation. Emissions after-treatment systems comprise the catalysts as disclosed herein. Methods of treating an exhaust stream comprising passing the exhaust stream through the catalysts disclosed herein.

BRIEF DESCRIPTION OF THE DRAWINGS

The disclosure may be more completely understood in consideration of the following detailed description of various embodiments of the disclosure in connection with the accompanying drawings, in which:

FIG. 1 provides a scanning electron microscope image of a mixed metal oxide composite according to an embodiment made from a colloidal alumina;

FIG. 2 provides a scanning electron microscope image of a comparative mixed metal oxide composite made from an aluminum precursor sourced from a soluble salt;

FIG. 3 provides a graph of cumulative pore volume as a function of pore radius by Hg porosimetry method for examples after 12 hours of hydrothermal aging at 1050°C;

FIG. 4 provides an X-ray diffraction pattern of one embodiment of a mixed metal oxide composite with the ceria-zirconia component crystallized in a cubic phase after hydrothermal aging at 1050 °C for 12 hours;

FIG. 5 provides an X-ray diffraction pattern of another embodiment of a mixed metal oxide composite with the ceria-zirconia component crystallized in a tetragonal phase after hydrothermal aging at 1050 °C for 12 hours;

FIG. 6 provides a graph of reducibility of ceria versus alumina content by the $H_2$-TPR method at a temperature up to 900°C for examples with the same contents of ceria and dopants after hydrothermal aging at 1050 °C for 12 hours; and

FIG. 7 provides a comparison of BET surface area for an inventive sample versus comparative examples with an analogous composition; and

FIG. 8 provides a graph of tailpipe $NO_x$, HC and CO emissions for a three-way conversion (TWC) catalyst made with a mixed metal oxide embodiment disclosed herein as compared to a TWC catalyst made with a comparative mixed metal oxide.

DETAILED DESCRIPTION

It is been found that the use of a soluble aluminum salt to prepare oxygen storage component (OSC) materials such as ceria-zirconia composites can deteriorate the oxygen storage capacity function of the composites, because the $Al^{3+}$ ion of the salt precursor can damage the surface area of the ceria-zirconia component upon high temperature aging. In addition, a relatively high alumina content has to be used to retain a high surface area (alumina is thermally more stable than ceria-zirconia) in a trade-off of oxygen storage capacity. Use of colloidal alumina to form a diffusion barrier on the ceria-zirconia composite reduced the deleterious effects associated with the use of a soluble aluminum salt. Specifically, use of colloidal alumina results in composites having higher surface areas and pore volumes along with lower alumina loadings as compared composites formed with soluble aluminum salts. Mixed metal oxide composites prepared using colloidal alumina have higher thermal stability and oxygen storage capacity than comparative composites prepared using a soluble aluminum salt.

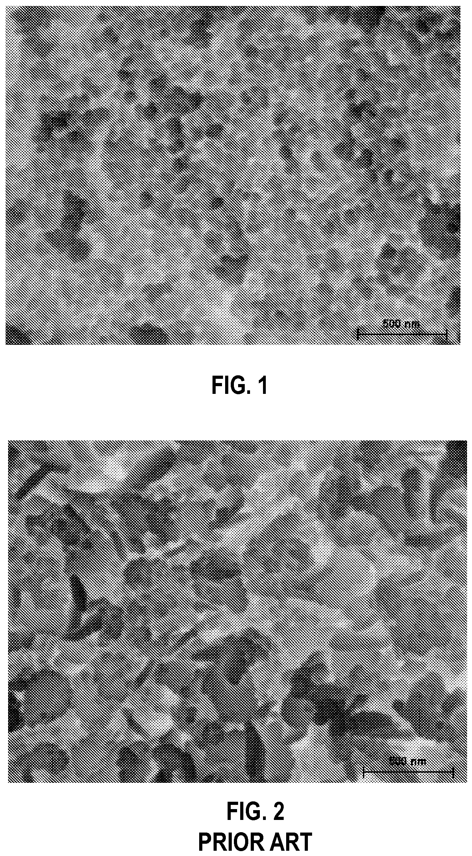

Without intending to be bound by theory, it is thought that, in conjunction with using colloidal alumina, treatment of raw precipitates with a surfactant such as a fatty acid aids in increasing intra-particle distance. In addition, hydrothermal treatment can assist in enhancing porosity of the raw precipitates. As such, mixed metal oxide composites prepared using colloidal alumina can have substantially more spherical morphologies as shown in FIG. 1, in contrast to mixed metal oxides prepared using a soluble aluminum salt as shown in FIG. 2, which has a more agglomerated morphology.

The following terms shall have, for the purposes of this application, the respective meanings set forth below.

"Colloidal alumina" refers to a suspension of nano-sized alumina particles comprising aluminum oxide, aluminum hydroxide, aluminum oxyhydroxide, or a mixture thereof. Anions such as nitrate, acetate and formate may coexist in a colloidal alumina suspension. In one or more embodiments, the colloidal alumina is suspended in deionized water in solids loadings in the range of 5% to 50% by weight.

"Random mixture" refers to the absence of a deliberate attempt to load or impregnate one material with another. For example, incipient wetness is excluded from randomly mixing because of the choice to impregnate one ingredient with another.

"Ceria-zirconia solid solution" refers to a mixture of ceria, zirconia, and optionally one or more rare earth metal oxides other than ceria whereas the mixture exists in a homogeneous phase.

"Platinum group metal components" refer to platinum group metals or their oxides.

"Hydrothermal aging" refers to aging of a powder sample at a raised temperature in the presence of steam. In this invention, the hydrothermal aging was performed at 950°C or 1050°C in the presence of 10 vol. % of steam under air.

"Hydrothermal treatment" refers to the treatment of an aqueous suspension sample at a raised temperature in a sealed vessel. In one or more embodiments, the hydrothermal treatment is performed at temperatures at 80-300°C in a pressure-resistant steel autoclave.

"BET surface area" has its usual meaning of referring to the Brunauer-Emmett-Teller method for determining surface area by $N_2$-adsorption measurements. Unless otherwise stated, "surface area" refers to BET surface area.

"Rare earth metal oxides" refer to one or more oxides of scandium, yttrium, and the lanthanum series defined in the Periodic Table of Elements.

"Washcoat" is a thin, adherent coating of a catalytic or other material applied to a refractory substrate, such as a honeycomb flow through monolith substrate or a filter substrate, which is sufficiently porous to permit the passage there through of the gas stream being treated. A "washcoat layer," therefore, is defined as a coating that is comprised of support particles. A "catalyzed washcoat layer" is a coating comprised of support particles impregnated with catalytic components.

"TWC catalysts" comprise one or more platinum group metals (e.g., platinum, palladium, rhodium, rhenium and iridium) disposed on a support, which can be a mixed metal oxide as disclosed herein or a refractory metal oxide support, e.g., a high surface area alumina coating. The support is carried on a suitable carrier or substrate such as a monolithic carrier comprising a refractory ceramic or metal honeycomb structure, or refractory particles such as spheres or short, extruded segments of a suitable refractory material. The refractory metal oxide supports may be stabilized against thermal degradation by materials such as zirconia, titania, alkaline earth metal oxides such as baria, calcia or strontia or, most usually, rare earth metal oxides, for example, ceria, lanthana and mixtures of two or more rare earth metal oxides. For example, see U.S. Pat. No. 4,171,288 (Keith). TWC catalysts are formulated to include an oxygen storage component.

"Support" in a catalyst washcoat layer refers to a material that receives precious metals, stabilizers, promoters, binders, and the like through association, dispersion, impregnation, or other suitable methods. Examples of supports include, but are not limited to, high surface area refractory metal oxides and composites containing oxygen storage components such as the mixed metal oxides disclosed herein. The high surface area refractory metal oxide supports preferably display other porous features including but not limited to a large pore radius and a wide pore distribution. As defined herein, such metal oxide supports exclude molecular sieves, specifically, zeolites. High surface area refractory metal oxide supports, e.g., alumina support materials, also referred to as "gamma alumina" or "activated alumina", typically exhibit a BET surface area in excess of 60 square meters per gram ("$m^2/g$"), often up to about 200 $m^2/g$ or higher. Such activated alumina is usually a mixture of the gamma and delta phases of alumina, but may also contain substantial amounts of eta, kappa and theta alumina phases. Refractory metal oxides other than activated alumina can be used as a support for at least some of the catalytic components in a given catalyst. For example, bulk ceria, zirconia, alpha alumina and other materials are known for such use. Although many of these materials suffer from the disadvantage of having a considerably lower BET surface area than activated alumina, that disadvantage tends to be offset by a greater durability of the resulting catalyst.

"Flow communication" means that the components and/or conduits are adjoined such that exhaust gases or other fluids can flow between the components and/or conduits.

"Downstream" refers to a position of a component in an exhaust gas stream in a path further away from the engine than the component preceding component. For example, when a diesel particulate filter is referred to as downstream from a diesel oxidation catalyst, exhaust gas emanating from the engine in an exhaust conduit flows through the diesel oxidation catalyst before flowing through the diesel particulate filter. Thus, "upstream" refers to a component that is located closer to the engine relate to another component.

In the present disclosure, "%" refers to "wt. %" or "mass %", unless otherwise stated.


Preparation of Mixed Metal Oxide Composites

In general terms, which will be exemplified below, the mixed metal oxide composites are prepared by mixing salts of cerium and zirconium along with salts of any other desired rare earth metals in water to form an aqueous solution at ambient temperature to 80°C Colloidal alumina suspension is then added to the aqueous solution to form a mixture. The pH of the mixture is adjusted with a basic agent to form a raw precipitate. An exemplary pH range is 6.0 to 11.0. The basic agent may comprises ammonia, ammonium carbonate, ammonium bicarbonate, an alkaline metal hydroxide, an alkaline metal carbonate, an alkaline metal bicarbonate, an alkaline earth metal hydroxide, an alkaline earth metal carbonate, an alkaline earth metal bicarbonate, or combinations thereof. The raw precipitate is isolated or purified to form an isolated or purified precipitate. The isolated or purified precipitate is calcined to form the composite of mixed oxides. Calcining usually occurs under conditions of at least 600°C in a suitable oven or furnace. Another optional processing step is hydrothermally treating the raw precipitate at a temperature of at least 80°C or even 300°C. An optional further processing step includes treatment of the raw precipitate with an organic agent such as an anionic surfactant, a cationic surfactant, a zwitterionic surfactant, a non-ionic surfactant, a polymeric surfactant, or combinations thereof.

In embodiment 1, provided is a composite of mixed metal oxides according to claim 1.

In embodiment 2, provided is a catalyst for treating engine exhaust comprising a catalytic material coated on a substrate, the catalytic material comprising: the composite of mixed metal oxide of embodiment 1, which is used as oxygen storage component or a precious metal support, and a precious metal component selected from the group consisting of palladium, rhodium, platinum, and combinations thereof. A detailed embodiment provides that the catalyst of claim comprises the composite of mixed metal oxides in the range of about 0.006 $g/cm^3$ (0.1 $g/in^3$) to about 0.214 $g/cm^3$ (3.5 $g/in^3$). The precious metal component can be present in the range of about 0.035 g/l (1 $g/ft^3$) to about 10.59 g/l (300 $g/ft^3$) (or 0.53 -3.53 g/l (1.5-100 $g/ft^3$) or even 0.71-1.77 g/l (2.0-50 $g/ft^3$). Another detailed embodiment provides that the catalyst is a three-way conversion catalyst and the catalytic material is effective to substantially simultaneously oxidize hydrocarbons and carbon monoxide and reduce nitrogen oxides. Another detailed embodiment provides that the catalyst is a diesel oxidation catalyst and the catalytic material is effective to substantially simultaneously oxidize hydrocarbons and carbon monoxide.

In embodiment 3 provided is an emissions after-treatment system for treating an exhaust stream from an engine comprising the catalyst of embodiment 2 or any of its detailed embodiments in flow communication with the exhaust stream.

Any of embodiments 1-3 and methods of making or using the same, can have one or more of the following optional design features:

the morphology of the composite is substantially spherical as determined visually from a scanning electron microscope image;

the alumina content is in the range of 5 to less than 20% by weight of the composite, or in the range of 10-18% by weight of the composite;

wherein the cumulative pore volume is at least 0.75 ml/g after 12 hours of hydrothermal aging at 1050°C;

the pore volume in the pore radius range of 30 to 1000 Å is 35 vol. % or more of the cumulative total pore volume after 12 hours of hydrothermal aging at 1050°C;

the surface area is in the range of 24 $m^2/g$ to 80 $m^2/g$ after 12 hours of hydrothermal aging at 1050°C;

the surface area is in the range of 24 $m^2/g$ to 60 $m^2/g$ after 12 hours of hydrothermal aging at 1050°C;

the surface area is in the range of 24 $m^2/g$ to 60 $m^2/g$ and the pore volume in the pore radius range of 30 to 1000 Å is 35 vol. % or more of the total pore volume after 12 hours of hydrothermal aging at 1050°C;

the hydrogen ($H_2$) consumption in $H_2$-TPR at a temperature of up to 900°C is 7 ml/g or greater;

the phase of the ceria-zirconia solid solution is cubic, tetragonal or a combination thereof;

ingredients by weight of the composite comprising: alumina in the range of 10% to 18%, ceria in the range of 5% to 40%, zirconia in the range of 10% to 60% by weight, a rare earth oxide other than ceria in the range of 1% to 15%;

the composite comprising at least one rare earth oxide selected from the group consisting of yttria, praseodymia, lanthana, neodymia, samaria, and gadolinia; and/or

the composite comprising hafnia in the range of 0.01% to 10% by weight of the composite.

Embodiment 4 provides a method of making a composite of mixed metal oxides comprising ceria, zirconia, and alumina, the method comprising: forming an aqueous solution comprising a cerium salt, a zirconium salt, and optionally at least one rare earth metal salt other than cerium compound; providing a suspension of colloidal alumina in an amount in the range of 5 to less than 20% by weight in the composite; mixing the aqueous solution and the source of alumina to form a mixture; adjusting the pH of the mixture with a basic agent to form a raw precipitate; isolating the raw precipitate to obtain an isolated precipitate; hydrothermally treating the raw precipitate at a temperature of at east 80°C; and calcining the isolated precipitate at a temperature of at least 600°C to form the composite of mixed metal oxides. Embodiment 4 can include one or more of the following steps:

treating the raw precipitate with an anionic surfactant, a cationic surfactant, a zwitterionic surfactant, a non-ionic surfactant, a polymeric surfactant, or combinations thereof;

the surfactant is a fatty acid or a salt of a fatty acid;

the step of hydrothermally treating the raw precipitate occurs in the presence of a basic agent comprising ammonia, ammonium carbonate, ammonium bicarbonate, an alkaline metal hydroxide, an alkaline metal carbonate, an alkaline metal bicarbonate, an alkaline earth metal hydroxide, an alkaline earth metal carbonate, or an alkaline earth metal bicarbonate; and/or

the pH is in the range of 6.0 to 11.0 and the basic agent comprises ammonia, ammonium carbonate, ammonium bicarbonate, an alkaline metal hydroxide, an alkaline metal carbonate, an alkaline metal bicarbonate, an alkaline earth metal hydroxide, an alkaline earth metal carbonate, or an alkaline earth metal bicarbonate.

In embodiment 5, provided is a method of treating an exhaust stream comprising passing the exhaust stream through the catalyst of any embodiment disclosed herein, wherein the precious metal component is selected from the group consisting of palladium, rhodium, platinum, and combinations thereof.

Preparation of Catalyst Washcoats

TWC catalysts may be formed in a single layer or multiple layers. In some instances, it may be suitable to prepare one slurry of catalytic material and use this slurry to form multiple layers on the carrier. The catalysts can readily prepared by processes well known in the prior art. A representative process is set forth below.

The catalyst can be readily prepared in layers on a carrier. For a first layer of a specific washcoat, finely divided particles of a high surface area refractory metal oxide such as gamma alumina are slurried in an appropriate vehicle, e.g., water. To incorporate components such as precious metals (e.g., palladium, rhodium, platinum, and/or combinations of the same), stabilizers and/or promoters, such components may be incorporated in the slurry as a mixture of water soluble or water-dispersible compounds or complexes. Typically, when palladium is desired, the palladium component is utilized in the form of a compound or complex to achieve dispersion of the component on the refractory metal oxide support, e.g., activated alumina. The term "palladium component" means any compound, complex, or the like which, upon calcination or use thereof, decomposes or otherwise converts to a catalytically active form, usually the metal or the metal oxide. Water-soluble compounds or water-dispersible compounds or complexes of the metal component may be used as long as the liquid medium used to impregnate or deposit the metal component onto the refractory metal oxide support particles does not adversely react with the metal or its compound or its complex or other components which may be present in the catalyst composition and is capable of being removed from the metal component by volatilization or decomposition upon heating and/or application of a vacuum. In some cases, the completion of removal of the liquid may not take place until the catalyst is placed into use and subjected to the high temperatures encountered during operation. Generally, both from the point of view of economics and environmental aspects, aqueous solutions of soluble compounds or complexes of the precious metals are utilized. For example, suitable compounds are palladium nitrate or rhodium nitrate.

A suitable method of preparing any layer of the layered catalyst composite of the invention is to prepare a mixture of a solution of a desired precious metal compound (e.g., palladium compound) and at least one support, such as the mixed metal oxide composites disclosed herein and/or a finely divided, high surface area, refractory metal oxide support, e.g., gamma alumina, which is sufficiently dry to absorb substantially all of the solution to form a wet solid which later combined with water to form a coatable slurry. In one or more embodiments, the slurry is acidic, having, for example, a pH of 2 to less than 7. The pH of the slurry may be lowered by the addition of an adequate amount of an inorganic or an organic acid to the slurry. Combinations of both can be used when compatibility of acid and raw materials is considered. Inorganic acids include, but are not limited to, nitric acid. Organic acids include, but are not limited to, acetic, propionic, oxalic, malonic, succinic, glutamic, adipic, maleic, fumaric, phthalic, tartaric, citric acid and the like. Thereafter, if desired, water-soluble or water-dispersible compounds of oxygen storage components, e.g., cerium-zirconium composite, a stabilizer, e.g., barium acetate, and a promoter, e.g., lanthanum nitrate, may be added to the slurry.

In one embodiment, the slurry is thereafter comminuted to result in substantially all of the solids having particle sizes of less than about 20 microns, i.e., between about 0.1-15 microns, in an average diameter. The comminution may be accomplished in a ball mill or other similar equipment, and the solids content of the slurry may be, e.g., 20-60 wt.%, more particularly 30-40 wt.%.

Additional layers, i.e., the second and third layers may be prepared and deposited upon the first layer in the same manner as described above for deposition of the first layer upon the carrier.


AGING AND ANALYTICS OF COMPOSITES

For aging, powder samples were placed in high temperature resistant ceramic boats and heated in a horizontal tube furnace fit with a quartz tube. Aging was carried out under a flow of air and 10% steam controlled by a water pump. The temperature was ramped up to a desired temperature and remained at the desired temperature for a desired amount of time. A calibrated thermocouple was placed nearby the samples to control the aging temperature.

For X-Ray diffraction (XRD), data were collected on a PANalytical MPD X'Pert Pro diffraction system. Cu $K_\alpha$ radiation was used in the data collection with generator settings of 45 kV and 40 mA. The optical path consisted of a 1/4° divergence slit, 0.04 radian soller slits, 15 mm mask, 1/2° anti-scatter slits, the sample, 0.04 radian soller slits, Ni filter, and a PIXCEL position sensitive detector set to a 2.144° angular range. Samples were gently ground in a mortar with a pestle and then packed in a round mount. The data collection from the round mount covered a $2\theta$ range from 10° to 90° using a step scan with a step size of 0.026° and a count time of 600s per step. Jade Plus 9 Analytical X-Ray Diffraction Software was used for all steps of the data analysis. The phases present in each sample were identified by search and match of the data available from International Center for Diffraction Data (ICDD).

Hydrogen temperature-programmed reduction ($H_2$-TPR) was carried out on a Micromeritics Autochem Series Instrument. A sample was pretreated under a flow of 4% $O_2$ in He at 450°C for 20 min and then cooled down to ambient temperature. The TPR experiment was run at a temperature-ramping rate of 10 °C/min from room temperature to 900 °C in 1.0% $H_2$ balanced with $N_2$ at a gas flow rate of 50 cc/min. The consumption of $H_2$ is accumulated at a temperature up to 900°C and is used to calculate the reducibility of ceria according to the following equation:

$$\text{Ceria Reducibility} = \frac{\text{Experimental } H_2 \text{ Consumption}}{\text{Theoretical } H_2 \text{ Consumption}} \times 100\%$$

wherein the theoretical $H_2$ consumption is calculated by assuming complete reduction of Ce(IV) to Ce(III) for one gram of the sample. The ceria reducibility reflects the efficiency of utilizing the ceria component of a mixed oxide composite under a reductive environment.

$N_2$-Adsorption/desorption measurements were carried out on a Micromeritics TriStar 3000 Series Instrument using American Standard Testing Method (ASTM) D3663. Samples were degassed for 4 hours at 300°C under a flow of dry nitrogen on a Micromeritics SmartPrep degasser.

Mercury porosimetry determinations were performed on a Micromeritics AutoPore IV Instrument on powder samples which were degassed overnight at 200°C. The porosity of the samples was analyzed from approximately 0.003 to 900 microns using a time-based equilibrium at specified pressures up to 413.7 MPa (60,000 psi). The operating parameters included a penetrometer constant of 22.07 $\mu$L/pF and a contact angle of 140.0 deg.

EXAMPLES OF COMPOSITES

The following examples illustrate the preparation and characterization of representative embodiments related to the present invention. However, the present invention is not limited to these examples.

EXAMPLE 1

This example describes the preparation of a composite of cerium, zirconium, lanthanum, yttrium, and aluminum oxides in respective mass proportions of 25%, 45%, 5%, 5%, and 20%.

To a beaker under stirring were sequentially charged 20 g of de-ioned water, 43.9 g of a zirconium oxynitrate solution (20.5% on a $ZrO_2$ basis), 3.4 g of yttrium nitrate hexahydrate crystals, 3.8 g of a lanthanum nitrate solution (26.5% on a $La_2O_3$ basis), and 17.2 g of a cerium nitrate solution (29.0% on a $CeO_2$ basis). A clear solution was formed, to which was added 26.7 g of a 15.0% aqueous colloidal alumina (23N4-80 from Sasol) suspension, followed by addition of 16.0 g of a 30% aqueous hydrogen peroxide solution. The mixture was agitated for 5 minutes and the resulting suspension was transfer to a drop funnelTo another beaker under vigorous stirring were charged 60 g of a 29.4% aqueous ammonia solution and 40 g of de-ioned water. The nitrate-containing suspension prepared above was added dropwise via the drop funnel to the ammonia solution over 1 hour. A pH of 9.8 was obtained upon completing the addition. The precipitate was collected by filtration and washed with de-ioned water to remove soluble nitrates. The frit was re-dispersed in de-ioned water to form a slurry of a solid percentage of 10%. The pH of the slurry was adjusted to 10 with an additional treatment of ammonia by using a 29.4% aqueous ammonia solution. Hydrothermal treatment of the slurry was conducted in an autoclave at 150°C for 10 hours. After the hydrothermal treatment, the slurry was transferred to a beaker and then the temperature was raised to 70°C. Under stirring, the raw precipitate was treated with a surfactant by adding 9.0 g of lauric acid in small portions to the mixture which was kept at 70°C for 1 hour. The solid was collected by filtration and washed with de-ioned water. The washed frit was dried at 120°C overnight and calcined at 650°C for 5 hours to give the target composite as a pale yellow powder in quantitative yield.

EXAMPLE 2

This example describes the preparation of a composite of cerium, zirconium, lanthanum, neodymium, and aluminum oxides in respective mass proportions of 25%, 45%, 5%, 5%, and 20%. The starting materials used in this preparation included 43.9 g of a zirconium oxynitrate solution (20.5% on a $ZrO_2$ basis), 3.7 g of a neodymium nitrate solution (27.4% on a $Nd_2O_3$ basis), 3.8 g of a lanthanum nitrate solution (26.5% on a $La_2O_3$ basis), 17.2 g of a cerium nitrate solution (29.0% on a $CeO_2$ basis), and 26.7 g of a 15.0% aqueous colloidal alumina (23N4-80) suspension. The procedure described in Example 1 was followed and the target composite was obtained as a pale yellow powder in quantitative yield.

EXAMPLE 3

This example describes the preparation of a composite of cerium, zirconium, lanthanum, and aluminum oxides in respective mass proportions of 25%, 50%, 5%, and 20%. The starting materials used in this preparation included 48.8 g of a zirconium oxynitrate solution (20.5% on a $ZrO_2$ basis), 3.8 g of a lanthanum nitrate solution (26.5% on a $La_2O_3$ basis), 17.3 g of a cerium nitrate solution (29.0% on a $CeO_2$ basis), and 26.7 g of a 15.0% aqueous colloidal alumina (23N4-80) suspension. The procedure described in Example 1 was followed and the target composite was obtained as a pale yellow powder in quantitative yield.

EXAMPLE 4

This example describes the preparation of a composite of cerium, zirconium, lanthanum, yttrium, and aluminum oxides in respective mass proportions of 15%, 55%, 5%, 5%, and 20%. The starting materials used in this preparation included 53.7 g of a zirconium oxynitrate solution (20.5% on a $ZrO_2$ basis), 3.4 g of yttrium nitrate hexahydrate crystals, 3.8 g of a lanthanum nitrate solution (26.5% on a $La_2O_3$ basis), 10.4 g of a cerium nitrate solution (29.0% on a $CeO_2$ basis), and 26.7 g of a 15.0% aqueous colloidal alumina (23N4-80) suspension. The procedure described in Example 1 was followed and the target composite was obtained as a pale yellow powder in quantitative yield.

EXAMPLE 5

This example describes the preparation of a composite of cerium, zirconium, lanthanum, yttrium, and aluminum oxides in respective mass proportions of 10%, 62%, 5%, 5%, and 18%. The starting materials used in this preparation included 124.0 g of a zirconium oxynitrate solution (20.0% on a $ZrO_2$ basis), 13.3 g of a yttrium nitrate solution (15.0% on a $Y_2O_3$ basis), 7.6 g of a lanthanum nitrate solution (26.5% on a $La_2O_3$ basis), 13.8 g of a cerium nitrate solution (29.0% on a $CeO_2$ basis), and 48.0 g of a 15.0% aqueous colloidal alumina (23N4-80) suspension. The procedure described in Example 1 was followed and the target composite was obtained as a pale yellow powder in quantitative yield.

EXAMPLE 6

This example describes the preparation of a composite of cerium, zirconium, lanthanum, yttrium, and aluminum oxides in respective mass proportions of 25%, 50%, 5%, 5%, and 15%. The starting materials used in this preparation included 100.0 g of a zirconium oxynitrate solution (20.0% on a $ZrO_2$ basis), 13.3 g of a yttrium nitrate solution (15.0% on a $Y_2O_3$ basis), 7.6 g of a lanthanum nitrate solution (26.5% on a $La_2O_3$ basis), 34.5 g of a cerium nitrate solution (29.0% on a $CeO_2$ basis), and 40.0 g of a 15.0% aqueous colloidal alumina (23N4-80) suspension. The procedure described in Example 1 was followed and the target composite was obtained as a pale yellow powder in quantitative yield.

EXAMPLE 7

This example describes the preparation of a composite of cerium, zirconium, lanthanum, yttrium, and aluminum oxides in respective mass proportions of 25%, 55%, 5%, 5%, and 10%. The starting materials used in this preparation included 53.7 g of a zirconium oxynitrate solution (20.5% on a $ZrO_2$ basis), 3.4 g of yttrium nitrate hexahydrate crystals, 3.8 g of a lanthanum nitrate solution (26.5% on a $La_2O_3$ basis), 17.2 g of a cerium nitrate solution (29.0% on a $CeO_2$ basis), and 13.3 g of a 15.0% aqueous colloidal alumina (23N4-80) suspension. The procedure described in Example 1 was followed and the target composite was obtained as a pale yellow powder in quantitative yield.

EXAMPLE 8

This example describes the preparation of a composite of cerium, zirconium, lanthanum, praseodymium, and aluminum oxides in respective mass proportions of 28%, 47%, 5%, 2%, and 18%. The starting materials used in this preparation included 94.0 g of a zirconium oxynitrate solution (20.0% on a $ZrO_2$ basis), 5.2 g of a praseodymium nitrate solution (15.3% on a $Pr_6O_{11}$ basis), 7.6 g of a lanthanum nitrate solution (26.5% on a $La_2O_3$ basis), 38.6 g of a cerium nitrate solution (29.0% on a $CeO_2$ basis), and 48.0 g of a 15.0% aqueous colloidal alumina (23N4-80) suspension. The procedure described in Example 1 was followed and the target composite was obtained as an orange powder in quantitative yield.

EXAMPLE 9

COMPARATIVE

This example describes the preparation of a composite of cerium, zirconium, lanthanum, yttrium, and aluminum oxides in respective mass proportions of 25%, 35%, 5%, 5%, and 30%. The starting materials used in this preparation included 34.2 g of a zirconium oxynitrate solution (20.5% on a $ZrO_2$ basis), 3.4 g of yttrium nitrate hexahydrate crystals, 3.8 g of a lanthanum nitrate solution (26.5% on a $La_2O_3$ basis), 17.3 g of a cerium nitrate solution (29.0% on a $CeO_2$ basis), and 40.7 g of a 15.0% aqueous colloidal alumina (23N4-80) suspension. The procedure described in Example 1 was followed and the target composite was obtained as a pale yellow powder in quantitative yield.

EXAMPLE 10

COMPARATIVE

This example describes the preparation of a composite of cerium, zirconium, lanthanum, yttrium, and aluminum oxides in respective mass proportions of 25%, 15%, 5%, 5%, and 50%. The starting materials used in this preparation included 15.1 g of a zirconium oxynitrate solution (20.0% on a $ZrO_2$ basis), 6.7 g of a yttrium nitrate solution (15.0% on a $Y_2O_3$ basis), 3.8 g of a lanthanum nitrate solution (26.5% on a $La_2O_3$ basis), 17.3 g of a cerium nitrate solution (29.0% on a $CeO_2$ basis), and 50.0 g of a 15.0% aqueous colloidal alumina (23N4-80) suspension. The procedure described in Example 1 was followed and the target composite was obtained as a pale yellow powder in quantitative yield.

EXAMPLE 11

COMPARATIVE

This example describes the preparation of a composite of cerium, zirconium, lanthanum, yttrium, and aluminum oxides in respective mass proportions of 25%, 50%, 5%, 5%, and 15% (the same composition to Example 6) using aluminum nitrate nonahydrate as the alumina precursor. To a beaker under stirring were sequentially charged 40 g of de-ioned water, 100.0 g of a zirconium oxynitrate solution (20.0% on a $ZrO_2$ basis), 13.3 g of a yttrium nitrate solution (15.0% on a $Y_2O_3$ basis), 7.6 g of a lanthanum nitrate solution (26.5% on a $La_2O_3$ basis), 34.5 g of a cerium nitrate solution (29.0% on a $CeO_2$ basis), 44.1 g of aluminum nitrate nonahydrate crystals, and 32.0 g of a 30% aqueous hydrogen peroxide solution. The mixture was agitated for 5 minutes and the resulting solution was transfer to a drop funnel. To another beaker under vigorous stirring were charged 120 g of a 29.4% aqueous ammonia solution and 80 g of de-ioned water. The nitrate solution prepared above was added dropwise via the drop funnel to the ammonia solution over 2 hour. A pH of 9.4 was obtained upon completing the addition. Further workup as described in Example 1, expect for using 18 g of lauric acid, gave the target composite as a pale yellow powder in quantitative yield.

EXAMPLE 12

COMPARATIVE

A physical mixture containing 3.0 g of a high surface area gamma-alumina (surface area after hydrothermal aging at 1050°C for 12 hours: 33.8 $m^2$/g) and 17.0 g of a high surface area, doped ceria-zirconia material (composition: 30% $CeO_2$, 60% $ZrO_2$, 5% $La_2O_3$ and 5% $Y_2O_3$; surface area after hydrothermal aging at 1050°C for 12 hours: 29.8 $m^2$/g) was prepared. The mixture has a final composition of cerium, zirconium, lanthanum, yttrium, and aluminum oxides in respective mass proportions of 25.5%, 51%, 4.3%, 4.3%, and 15%. The composition of Comparative Example 12 is closely analogous to the composition of Example 6.

TESTING OF COMPOSITES

The compositions of Examples 1-8 and Comparative Examples 9-12 are summarized in Table 1.

**Table 1**

| Sample | Composition, wt. % | | | | | | |
|---|---|---|---|---|---|---|---|
| | $CeO_2$ | $ZrO_2$ | $La_2O_3$ | $Y_2O_3$ | $Nd_2O_3$ | $Pr_6O_{11}$ | $Al_2O_3$ |
| EXAMPLE 1 | 25 | 45 | 5 | 5 | - | - | 20 |
| EXAMPLE 2 | 25 | 45 | 5 | - | 5 | - | 20 |
| EXAMPLE 3 | 25 | 50 | 5 | - | - | - | 20 |
| EXAMPLE 4 | 15 | 55 | 5 | 5 | - | - | 20 |
| EXAMPLE 5 | 10 | 62 | 5 | 5 | - | - | 18 |
| EXAMPLE 6 | 25 | 50 | 5 | 5 | - | - | 15 |
| EXAMPLE 7 | 25 | 55 | 5 | 5 | - | - | 10 |
| EXAMPLE 8 | 28 | 47 | 5 | - | - | 2 | 18 |
| EXAMPLE 9 COMPARATIVE | 25 | 35 | 5 | 5 | - | - | 30 |
| EXAMPLE 10 COMPARATIVE | 25 | 15 | 5 | 5 | - | - | 50 |
| EXAMPLE 11 COMPARATIVE | 25 | 50 | 5 | 5 | - | - | 15 |
| EXAMPLE 12 COMPARATIVE | 25.5 | 51 | 4.3 | 4.3 | - | - | 15 |

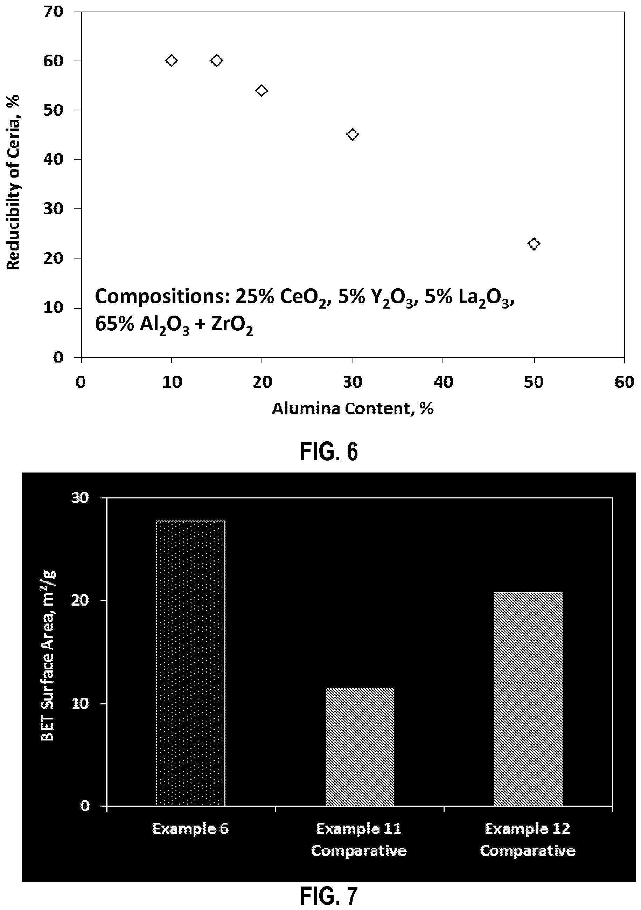

Table 2 provides data obtained by hydrogen temperature-programmed reduction (TPR) for the samples hydrothermally aged at 1050°C for 12 hours. The ceria reducibility of Examples 1, 6 and 7, and Comparative Examples 9 and 10 are plotted in FIG. 6. These five samples have the same contents of ceria (25%) and dopants (5% $La_2O_3$ and 5% $La_2O_3$) but different contents of alumina (10-50%) and balance zirconia. It is clearly shown that the reducibility of ceria increases upon decreasing the content of alumina in this series of samples. One unique feature of the current invention is that, by choosing a relatively low content of alumina (< 30%), the inventive composites exhibit a reducibility of ceria greater than 50%.

**Table 2**

| | H$_2$-TPR | |
|---|---|---|
| Sample [a] | H$_2$ Consumption, ml/g | CeO$_2$ Reducibility, % |
| EXAMPLE 1 | 8.8 | 54 |
| EXAMPLE 2 | 9.2 | 57 |
| EXAMPLE 3 | 11.1 | 68 |
| EXAMPLE 4 | 6.4 | 66 |
| EXAMPLE 5 | 5.6 | 86 |
| EXAMPLE 6 | 9.7 | 60 |
| EXAMPLE 7 | 9.7 | 60 |
| EXAMPLE 8 | 12.0 | 66 |
| EXAMPLE 9 COMPARATIVE | 7.3 | 45 |
| EXAMPLE 10 COMPARATIVE | 3.7 | 23 |

[a] Samples hydrothermally aged at 1050°C for 12 hours.

Table 3 provides data of the BET surface area determined by the standard N$_2$-adsorption/desorption method. The samples were analyzed as-is as well as after being aged at high temperatures (950°C and 1050°C) for 12 hours in air and 10 vol. % of steam. The data acquired upon aging at 1050°C are discussed in the following. Examples 1-8 exhibit a surface area ranging from 24.8 to 40.5 m$^2$/g after aging. Comparative Examples 9 and 10 have a surface area of 41.3 and 43.4 m$^2$/g, respectively. However, the relatively large surface area is mainly contributed by the higher content of alumina. FIG. 7 shows a comparison of the BET surface area of Example 6 and Comparative Examples 11 and 12 with an analogous composition. The data reveal that Example 6 prepared using the colloidal alumina as the precursor has notably higher thermal stability than Comparative Example 11 prepared using a soluble aluminum salt (27.8 m$^2$/g versus 15.8 m$^2$/g). Moreover, in comparison with Comparative Example 12 which is a physical mixture of a high surface area alumina and a high surface area ceria-zirconia of a similar composition, Example 6 still displays higher surface area (27.8 m$^2$/g versus 20.8 m$^2$/g) upon high temperature aging.

**Table 3**

| | BET Surface Area, m$^2$/g | | |
|---|---|---|---|
| Sample | Fresh (as is) | 950°C, 12 hrs[a] | 1050°C, 12 hrs[a] |
| EXAMPLE 1 | 155 | 57.1 | 35.3 |
| EXAMPLE 2 | 155 | 61.4 | 31.2 |
| EXAMPLE 3 | 148 | 53.9 | 40.5 |
| EXAMPLE 4 | 150 | 53.3 | 31.5 |
| EXAMPLE 5 | 153 | 50.4 | 30.8 |
| EXAMPLE 6 | 153 | 46.3 | 27.8 |
| EXAMPLE 7 | 158 | 44.5 | 24.8 |
| EXAMPLE 8 | 142 | 46.7 | 28.9 |
| EXAMPLE 9 COMPARATIVE | 159 | 55.1 | 41.3 |
| EXAMPLE 10 COMPARATIVE | 154 | 57.0 | 43.4 |
| EXAMPLE 11 COMPARATIVE | 66.0 | 32.8 | 15.8 |
| EXAMPLE 12 COMPARATIVE | - | - | 20.8 |

[a] Hydrothermal aging conditions.

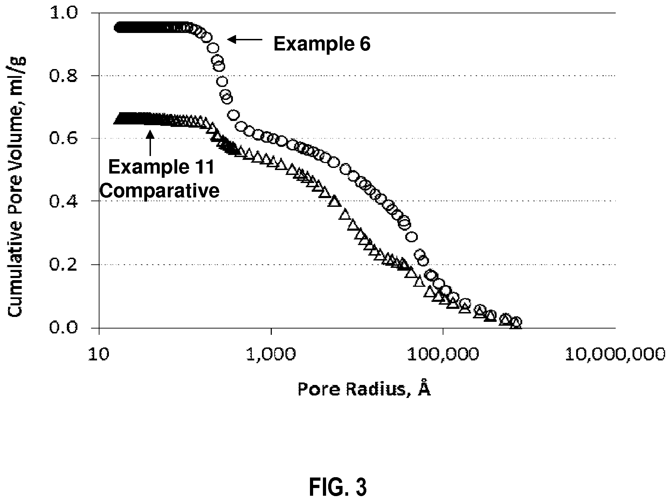

Table 4 provides pore volumes of Examples 1-8 and Comparative Examples 11 acquired by the mercury porosimetry method after 12 hours of hydrothermal aging at 1050°C. FIG. 3 provides a graph of cumulative pore volume as a function of pore radius for Example 6 and Comparative Example 11. These data demonstrate that the inventive examples have a total pore volume of 0.78-1.10 ml/g, substantially larger than the comparative example. The difference in the total pore volume is mainly contributed by the pores with a diameter of 30 to 1000 Å. For Examples 1-8, the pore volume of the pores with a diameter of 30 to 1000 Å accounts for more than 35% of the corresponding total pore volume. This percentage is significantly less for the comparative example prepared using a soluble aluminum salt as the precursor.

**Table 4**

| Sample [a] | Hg Porosimetry | |
| --- | --- | --- |
| | Total Pore Volume, ml/g | Pore Volume (30-1000 Å), ml/g |
| EXAMPLE 1 | 1.05 | 0.42 |
| EXAMPLE 2 | 0.88 | 0.35 |
| EXAMPLE 3 | 0.90 | 0.36 |
| EXAMPLE 4 | 0.78 | 0.36 |
| EXAMPLE 5 | 1.06 | 0.50 |
| EXAMPLE 6 | 1.08 | 0.46 |
| EXAMPLE 7 | 0.77 | 0.32 |
| EXAMPLE 8 | 1.10 | 0.55 |
| EXAMPLE 11 COMPARATIVE | 0.66 | 0.12 |

[a] Samples hydrothermally aged at 1050°C for 12 hours.

Mixed metal oxide composites prepared using the colloidal alumina can have substantially more spherical morphologies as shown in FIG. 1, which is a scanning electron microscope image of Example 1, in contrast to mixed metal oxides prepared by using a soluble aluminum salt and having a more agglomerated morphology as shown in FIG. 2.

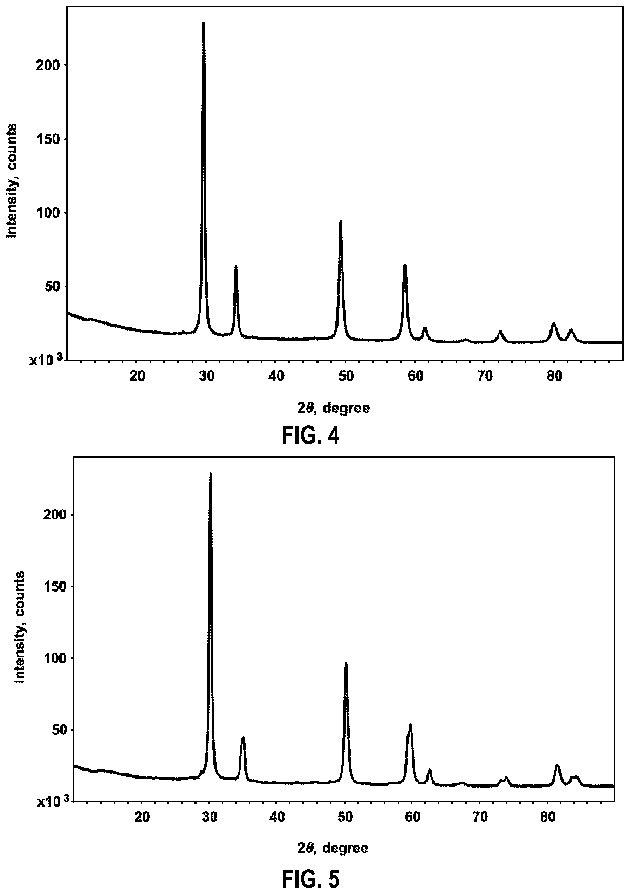

The XRD patterns of Examples 1-8 are consistent with the coexistence of a single homogeneous solid solution of the doped ceria-zirconia component and multiple transitional alumina phases. The phase of the doped ceria-zirconia component has either a cubic zirconia structure or a tetragonal zirconia structure. FIG. 4 shows the X-ray diffraction pattern of an exemplary mixed metal oxide composite prepared using a colloidal alumina and hydrothermally aged at 1050°C for 12 hours, which crystallizes in the cubic structure. FIG. 5 shows the X-ray diffraction pattern of another exemplary mixed metal oxide composite prepared using a colloidal alumina and hydrothermally aged at 1050°C for 12 hours, which crystallizes in the tetragonal structure. The doped ceria-zirconia component of the mixed metal oxide composite exists as a single homogeneous solid solution, indicating the material is thermally stable upon aging at 1050°C.

EXAMPLES OF CATALYSTS

EXAMPLE 13

This example demonstrates the preparation of a three-way conversion (TWC) catalyst comprising a single layered washcoat architecture using the inventive composite Example 5 as one of supports for a platinum group metal (PGM). Four PGM-containing supports were prepared by a standard wetness incipient impregnation method followed by calcination at 550°C for 2 hours. The first impregnated support was prepared by adding a diluted rhodium nitrate solution to 0.061 g/cm$^3$ (1.00 g/in$^3$) of Example 6 resulting in 0.079 g/L (2.25 g/ft$^3$) Rh. The second impregnated support was prepared by adding a diluted rhodium nitrate solution to 0.029 g/cm$^3$ (0.47 g/in$^3$) of a high surface area gamma-alumina (BET surface area: 150 m$^2$/g) resulting in 0.026 g/L (0.75 g/ft$^3$) Rh. The third impregnated support was prepared by adding a diluted palladium nitrate solution to 0.088 g/cm$^3$ (1.45 g/in$^3$) of a stabilized ceria-zirconia composite (CeO$_2$: 30 wt. %) resulting in 0.913 g/L (25.85 g/ft$^3$) Pd. The fourth impregnated support was prepared by adding a diluted palladium nitrate solution to 0.029 g/cm$^3$ (0.47 g/in$^3$) of a high surface area gamma-alumina resulting in 0.750 g/L (21.25 g/ft$^3$) Pd. The four PGM-impregnated supports were dispersed in de-ioned water containing barium acetate of 0.006 g/cm3 (0.10 g/in3) BaO and zirconium oxynitrate of 0.006 g/cm$^3$ (0.10 g/in$^3$) ZrO$_2$. The resulting suspension was adjusted with acetic acid and then milled to give the coating slurry. The slurry was coated onto a ceramic monolith substrate, dried at 110°C, and calcined at 550°C in air to give a total washcoat loading of 0.22 g/cm$^3$ (3.61 g/in$^3$).

EXAMPLE 14

COMPARATIVE

This example demonstrates the preparation of a three-way conversion (TWC) catalyst comprising a single layered washcoat architecture using conventional supports for PGM. Four PGM-containing supports were prepared by a standard wetness incipient impregnation method followed by calcination at 550°C for 2 hours. The first impregnated support was prepared by adding a diluted rhodium nitrate solution 0.061 g/cm$^3$ (1.00 g/in$^3$) of a stabilized ceria-zirconia composite (CeO$_2$: 10 wt. %) resulting in 0.079 g/L (2.25 g/ft$^3$) Rh. The second impregnated support was prepared by adding a diluted rhodium nitrate solution to 0.029 g/cm$^3$ (0.47 g/in$^3$) of a high surface area gamma-alumina (BET surface area: 150 m$^2$/g) resulting in 0.026 g/L (0.75 g/ ft3) Rh. The third impregnated support was prepared by adding a diluted palladium nitrate solution to 0.088 g/cm3 (1.45 g/in$^3$) of a second stabilized ceria-zirconia composite (CeO$_2$: 30 wt. %) resulting in 0.913 g/L (25.85 g/ft$^3$) Pd. The fourth impregnated support was prepared by adding a diluted palladium nitrate solution to 0.029 g/cm$^3$ (0.47 g/in$^3$) of a high surface area gamma-alumina resulting in 0.750 g/L (21.25 g/ft$^3$) Pd. The four PGM-impregnated supports were dispersed in de-ioned water containing barium acetate of 0.006 g/cm$^3$ (0.10 g/in$^3$) BaO and zirconium oxynitrate of 0.006 g/cm$^3$ (0.10 g/in$^3$) ZrO$_2$. The resulting suspension was adjusted with acetic acid and then milled to give the coating slurry. The slurry was coated onto a ceramic monolith substrate, dried at 110°C, and calcined at 550°C in air to give a total washcoat loading of 0.22 g/cm$^3$ (3.61 g/in$^3$).

AGING AND TESTING OF CATALYSTS

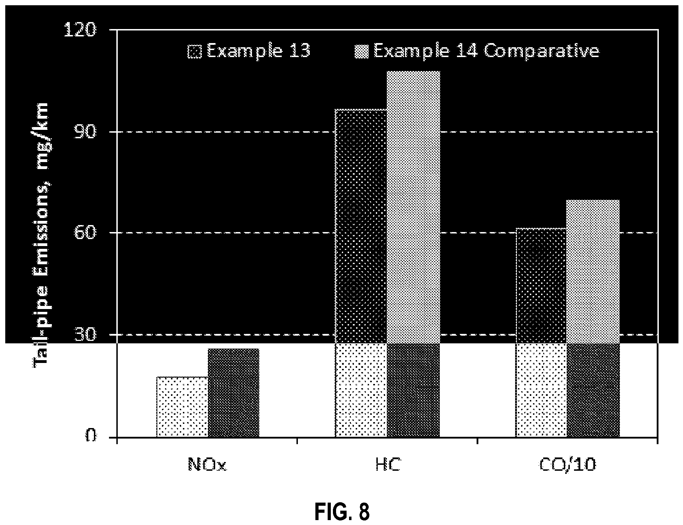

Example 13 and Comparative Example 14, 1 1002.9 cm$^3$ (61.2 in$^3$) in volume each, were loaded separately in a converter can, mounted in parallel in an exhaust line of a gasoline engine, and aged at a maximum bed temperature of 980°C for 80 hour using a fuel-cut aging cycle. The aged catalysts were tested on another gasoline engine operating New European Drive Cycles (NEDC) following certified procedures and tolerances. FIG. 8 provides tailpipe NO$_x$, HC and CO emissions during the NEDC tests. The data show that the three tailpipe emissions are reduced for Example 13 relative to Comparative Example 14.

**Claims**

1. A composite of mixed metal oxides comprising:

   a ceria-zirconia solid solution that optionally further comprises at least one rare earth oxide other than ceria, being a mixture of ceria, zirconia und optionally one or more rare earth metal oxides other than ceria whereas the mixture exists in a homogeneous phase; and
   alumina in an amount in the range of 5 to less than 20% by weight of the composite;

   the composite of mixed metal oxides comprising by weight of the composite:

   alumina in the range of 5% to less than 20%;
   ceria in the range of 1% to 50%;
   zirconia in the range of 10% to 70% by weight;
   rare earth oxides other than ceria in the range of 0% to 20,
   wherein the mixed metal oxide composite, after 12 hours of hydrothermal aging at 1050°C, has a reducibility of ceria of at least 50% in H$_2$-TPR at a temperature up to 900°C,
   wherein the composite of mixed metal oxides is a random mixture of the ceria-zirconia solution and the alumina, and the composite of mixed metal oxides is obtained by the process according to claim 4 or 5.

2. The composite of mixed metal oxides of claim 1, wherein the pore volume in the pore radius range of 30 to 1000 Å is 35 vol. % or more of the cumulative total pore volume after 12 hours of hydrothermal aging at 1050°C.

3. The composite of mixed metal oxides of claim 1, wherein the surface area is in the range of 24 m$^2$/g to 80 m$^2$/g after 12 hours of hydrothermal aging at 1050°C.

4. A method of making a composite of mixed metal oxides comprising ceria, zirconia, and alumina, the method comprising:

forming an aqueous solution comprising a cerium salt, a zirconium salt, and optionally at least one rare earth metal salt other than cerium compound;

providing a suspension of colloidal alumina in an amount that results in an alumina content in the range of 5 to less than 20% by weight in the composite;

mixing the aqueous solution and the suspension of colloidal alumina to form a mixture; adjusting the pH of the mixture with a basic agent to form a raw precipitate;

isolating the raw precipitate to obtain an isolated precipitate;

hydrothermally treating the raw precipitate at a temperature of at least 80°C;

and

calcining the isolated precipitate at a temperature of at least 600°C to form the composite of mixed metal oxides.

5. The method of claim 4, further comprising treating the raw precipitate with an anionic surfactant, a cationic surfactant, a zwitterionic surfactant, a non-ionic surfactant, a polymeric surfactant, or combinations thereof.

**Patentansprüche**

1. Verbundstoff aus gemischten Metalloxiden, umfassend:

einen Cerdioxid-Zirconiumdioxid-Mischkristall, der gegebenenfalls ferner mindestens ein Seltenerdoxid umfasst, bei dem es sich nicht um Cerdioxid handelt, der ein Gemisch aus Cerdioxid, Zirconiumdioxid und gegebenenfalls einem oder mehreren Seltenerdmetalloxiden ist, bei dem es sich nicht um Cerdioxid handelt, wobei das Gemisch in einer homogenen Phase vorliegt; und

Aluminiumoxid in einer Menge im Bereich von 5 bis weniger als 20 Gew.-% des Verbundstoffs;

wobei der Verbundstoff aus gemischten Metalloxiden, bezogen auf das Gewicht des Verbundstoffs, Folgendes umfasst:

Aluminiumoxid im Bereich von 5 % bis weniger als 20 %;

Cerdioxid im Bereich von 1 % bis 50 %;

Zirconiumdioxid im Bereich von 10 % bis 70 Gew.-%;

Seltenerdoxide, bei denen es sich nicht um Cerdioxid handelt, im Bereich von 0 % bis 20,

wobei der Mischmetalloxidverbundstoff nach 12 Stunden hydrothermaler Alterung bei 1050 °C eine Cerdioxid-Reduzierbarkeit von mindestens 50 % bei $H_2$-TPR bei einer Temperatur von bis zu 900 °C aufweist, wobei der Verbundstoff aus gemischten Metalloxiden ein zufälliges Gemisch aus der Cerdioxid-Zirconiumdioxid-Lösung und dem Aluminiumoxid ist und der Verbundstoff aus gemischten Metalloxiden durch das Verfahren nach Anspruch 4 oder 5 erhalten wird.

2. Verbundstoff aus gemischten Metalloxiden nach Anspruch 1, wobei das Porenvolumen im Porenradiusbereich von 30 bis 1000 Å nach 12 Stunden hydrothermaler Alterung bei 1050 °C bei 35 Vol.-% oder mehr des kumulativen Gesamtporenvolumens liegt.

3. Verbundstoff aus gemischten Metalloxiden nach Anspruch 1, wobei der Oberflächenbereich nach 12 Stunden hydrothermaler Alterung bei 1050 °C im Bereich von 24 m$^2$/g bis 80 m$^2$/g liegt.

4. Verfahren zur Herstellung eines Verbundstoffs aus gemischten Metalloxiden, umfassend Cerdioxid, Zirconiumdioxid und Aluminiumoxid, wobei das Verfahren Folgendes umfasst:

Bilden einer wässrigen Lösung, die ein Cersalz, ein Zirconiumsalz und gegebenenfalls mindestens ein Seltenerdmetallsalz umfasst, bei dem es sich nicht um eine Cerverbindung handelt;

Bereitstellen einer Suspension aus kolloidalem Aluminiumoxid in einer Menge, die zu einem Aluminiumoxidgehalt im Bereich von 5 bis weniger als 20 Gew.-% im Verbundstoff führt;

Mischen der wässrigen Lösung und der Suspension aus kolloidalem Aluminiumoxid unter Bildung eines Gemischs; Einstellen des pH-Werts des Gemischs mit einem basischen Mittel unter Bildung eines rohen Niederschlags;

Isolieren des rohen Niederschlags unter Erhalt eines isolierten Niederschlags;

hydrothermales Behandeln des rohen Niederschlags bei einer Temperatur von mindestens 80 °C;

und

Calcinieren des isolierten Niederschlags bei einer Temperatur von mindestens 600 °C unter Bildung des Verbundstoffs aus gemischten Metalloxiden.

**5.** Verfahren nach Anspruch 4, ferner umfassend ein Behandeln des rohen Niederschlags mit einem anionischen Tensid, einem kationischen Tensid, einem zwitterionischen Tensid, einem nichtionischen Tensid, einem polymeren Tensid oder Kombinationen davon.

**Revendications**

**1.** Composite d'oxydes métalliques mixtes comprenant :

une solution solide de céria-zircone qui comprend en outre éventuellement au moins un oxyde de terre rare différent du céria, qui est un mélange de céria, de zircone et éventuellement d'un ou de plusieurs oxydes métalliques de terres rares différentes du céria, tandis que le mélange existe sous une phase homogène ; et de l'alumine dans une proportion comprise dans l'intervalle allant de 5 à moins de 20 % en masse du composite ; le composite d'oxydes métalliques mixtes comprenant en masse du composite :

de l'alumine dans l'intervalle allant de 5 % à moins de 20 % ;
du céria dans l'intervalle allant de 1 % à 50 % ;
de la zircone dans l'intervalle allant de 10 % à 70 % en masse ;
des oxydes de terres rares différents du céria dans l'intervalle allant de 0 % à 20, dans lequel le composite d'oxydes métalliques mixtes, après 12 heures de vieillissement hydrothermique à 1050 °C, présente une réductibilité du céria d'au moins 50 % dans $H_2$-TPR à une température allant jusqu'à 900 °C,
dans lequel le composite d'oxydes métalliques mixtes est un mélange aléatoire de la solution de céria-zircone et de l'alumine, et le composite d'oxydes métalliques mixte est obtenu par le procédé selon la revendication 4 ou 5.

**2.** Composite d'oxydes métalliques mixtes selon la revendication 1, dans lequel le volume de pores dans l'intervalle de rayons de pore de 30 à 1000 Å est de 35 % en volume ou plus du volume de pores total cumulatif après 12 heures de vieillissement hydrothermique à 1050 °C.

**3.** Composite d'oxydes métalliques mixtes selon la revendication 1, dans lequel l'aire est comprise dans l'intervalle allant de 24 m$^2$/g à 80 m$^2$/g après 12 heures de vieillissement hydrothermique à 1050 °C.

**4.** Procédé de fabrication d'un composite d'oxydes métalliques mixtes comprenant du céria, de la zircone et de l'alumine, le procédé comprenant :

la formation d'une solution aqueuse comprenant un sel de cérium, un sel de zirconium, et éventuellement au moins un sel métallique de terre rare différent du composé de cérium ;
le fait de se munir d'une suspension d'alumine colloïdale dans une quantité qui entraîne une proportion en alumine comprise entre 5 et moins de 20 % en masse dans le composite ;
le mélangeage de la solution aqueuse et de la suspension d'alumine colloïdale pour former un mélange ;
l'ajustement du pH du mélange avec un agent basique pour former un précipité brut ;
l'isolement du précipité brut pour obtenir un précipité isolé ;
le traitement hydrothermique du précipité brut à une température d'au moins 80 °C ;
et
la calcination du précipité isolé à une température d'au moins 600 °C pour former le composite d'oxydes métalliques mixtes.

**5.** Procédé selon la revendication 4, comprenant en outre le traitement du précipité brut par un tensioactif anionique, un tensioactif cationique, un tensioactif zwitterionique, un tensioactif non ionique, un tensioactif polymère ou leurs combinaisons.

**FIG. 1**

**FIG. 2**
**PRIOR ART**

**FIG. 3**

FIG. 4

FIG. 5

Compositions: 25% $CeO_2$, 5% $Y_2O_3$, 5% $La_2O_3$, 65% $Al_2O_3$ + $ZrO_2$

FIG. 6

FIG. 7

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101954277 A
- JP 2001106527 A
- US 6831036 B1
- WO 2013062842 A1
- US 2006052243 A1
- US 5883037 A
- EP 2545990 A1
- JP 2011224428 A
- US 4171288 A, Keith

**Non-patent literature cited in the description**

- **SUGIURA et al.** *Bull. Chem. Soc. Jpn.,* 2005, vol. 78, 752
- **WANG et al.** *J. Phys. Chem. C,* 2008, vol. 112, 5113
- **ZHANG et al.** *Journal of Natural Chemistry,* June 2009, vol. 18 (2), 139-144
- **DI MONTE et al.** *Applied Catalysis B: Environmental,* 07 February 2000, vol. 24 (3-4), 157-167